# FASCICULE DE BREVET EUROPEEN

(11) **EP 4 197 410 B1**
(45) Date de publication et mention de la délivrance du brevet: **20.12.2023**
(21) Numéro de dépôt: 22212128.7
(22) Date de dépôt: 08.12.2022
(51) Int. Cl.: A47J 43/07, A47J 43/08

(54) **BOÎTIER D'APPAREIL ÉLECTROMÉNAGER AVEC REFROIDISSEMENT MOTEUR**
GEHÄUSE FÜR EIN HAUSHALTSGERÄT MIT MOTORKÜHLUNG
HOUSEHOLD APPLIANCE HOUSING WITH MOTOR COOLING

(30) Priorité: 20.12.2021 FR 2113981
(43) Date de publication de la demande: 21.06.2023
(73) Titulaire: SEB S.A., 69130 Ecully (FR)
(72) Inventeur: FERRON, Jean-Baptiste, 69134 ECULLY CEDEX (FR); LEMERCIER, Michel, 69134 ECULLY CEDEX (FR); FOULONNEAU, Stéphane, 69134 ECULLY CEDEX (FR)
(74) Mandataire: Regimbeau

(56) Documents cités:
- CN-A- 108 324 134
- CN-A- 110 876 571
- CN-U- 208 524 678
- CN-U- 208 909 908
- US-A1- 2009 189 559
- US-A1- 2017 296 992
- US-A1- 2019 320 849
- US-A1- 2019 328 178

## Description

### DOMAINE DE L'INVENTION

La présente invention concerne un boîtier d'appareil électroménager de préparation culinaire, et un appareil électroménager de préparation culinaire comprenant un tel boîtier.

### ETAT DE LA TECHNIQUE

Les appareils électroménagers de préparation culinaire, tels que les robots pâtissiers, peuvent comprendre une base formant un socle configuré pour recevoir un récipient de travail, et une tête disposée en regard de la base, la tête présentant un entraineur configuré pour être accouplé à un accessoire pour le traitement des aliments. La tête et la base forment ensemble un boîtier de l'appareil électroménager.

Un moteur adapté pour entraîner en rotation l'entraineur est logé dans le boîtier de l'appareil électroménager. Le moteur est amené à fonctionner pendant des durées prolongées, qui peuvent être de l'ordre de plusieurs minutes, par exemple pour pétrir de la pâte. Le moteur chauffe pendant son fonctionnement, et doit donc être refroidi pour permettre son fonctionnement pendant des durées prolongées. De plus, un bon refroidissement améliore aussi la durée de vie du moteur.

A cet effet, un appareil électroménager de préparation culinaire comprend classiquement un circuit de ventilation adapté pour refroidir le moteur lors de son fonctionnement. Le circuit de ventilation comprend une entrée d'air et une sortie d'air formées dans le boîtier de l'appareil électroménager. De l'air de ventilation s'écoule depuis l'entrée d'air vers la sortie d'air. Une roue de ventilation peut être disposée sous le moteur de sorte à évacuer l'air de ventilation vers la sortie d'air. Classiquement, l'entrée d'air est disposée en face du moteur et la sortie d'air est disposée en face de la roue de ventilation. Le boîtier forme une pièce de structure dans laquelle est directement logé le moteur.

Un tel circuit de ventilation entraîne un important bruit de ventilation, qui peut être gênant pour l'utilisateur de l'appareil électroménager, notamment lors d'une utilisation prolongée de l'appareil électroménager, par exemple lorsque le moteur fonctionne pendant plusieurs minutes d'affilée.

Certains appareils électroménagers prévoient une pièce supplémentaire adaptée pour entourer partiellement le moteur et pour forcer l'air de ventilation à s'écouler entre le moteur et la pièce supplémentaire. Le document CN 208909908 U décrit un appareil électroménager comprenant une telle pièce supplémentaire. Cette configuration permet de réduire le bruit de ventilation, mais son niveau reste important. En outre, la sortie d'air agencée en regard de la roue de ventilation génère des bruits importants.

Certains appareils électroménagers prévoient un système de mesure d'une vitesse de rotation d'un arbre entraîné par le moteur. Le document CN 208524678 U décrit ainsi un appareil électroménager qui comprend un capteur à effet Hall disposé au niveau de l'entraineur. Le capteur à effet Hall comprend un anneau magnétique qui est fixé sur l'arbre de l'entraineur, et qui est entraîné à une vitesse réduite par rapport à l'arbre du moteur.

### EXPOSE DE L'INVENTION

Un but de l'invention est de proposer un boîtier d'appareil électroménager de préparation culinaire qui permette de réduire le bruit causé lors du fonctionnement du moteur par rapport à l'art antérieur.

Un autre but de l'invention est de proposer un boîtier d'appareil électroménager de préparation culinaire qui permette d'optimiser l'efficacité de la ventilation par rapport à l'art antérieur.

Encore un but de l'invention est de proposer un boîtier d'appareil électroménager de préparation culinaire qui permet de limiter l'encombrement du dispositif de ventilation dans la base de l'appareil, tout en permettant de réduire le bruit causé lors du fonctionnement du moteur.

L'invention concerne un boîtier d'appareil électroménager de préparation culinaire, comprenant :
- une base destinée à reposer sur un plan de travail et formant un socle configuré pour recevoir un récipient de travail,
- une tête montée mobile par rapport à la base et présentant au moins un entraineur,
- un moteur prévu pour entraîner en rotation un arbre moteur relié audit au moins un entraineur, si désiré par l'intermédiaire d'un dispositif de transmission, et
- un circuit de ventilation ayant une roue de ventilation prévue pour générer un écoulement d'air de ventilation adapté pour refroidir le moteur lors du fonctionnement du moteur, le circuit de ventilation comprenant
   - une entrée d'air ménagée dans une première paroi du boîtier, l'entrée d'air étant formée dans la tête,
   - une sortie d'air ménagée dans une deuxième paroi du boîtier, la sortie d'air étant formée dans la base,
   - un déflecteur agencé autour du moteur et présentant une admission d'air et une évacuation d'air, de sorte que lors du fonctionnement du moteur, le déflecteur guide l'écoulement d'air de ventilation le long du moteur depuis l'admission d'air vers l'évacuation d'air, le moteur et le déflecteur étant agencés dans la tête,
   - un conduit d'entrée ménagé dans la tête du boîtier et reliant l'entrée d'air à l'admission d'air, et
   - un conduit de sortie ménagé dans le boîtier et reliant l'évacuation d'air à la sortie d'air, caractérisé en ce que :
      - l'évacuation d'air débouche en regard d'une paroi interne latérale du boîtier ménagée dans la base, et
      - le conduit de sortie est agencé pour former une chicane entre l'évacuation d'air et la sortie d'air afin que la sortie d'air soit située à distance et décalée par rapport à la roue de ventilation de sorte que, en fonctionnement, l'air descend le long de ladite paroi interne latérale pour atteindre la sortie d'air.

Certaines caractéristiques préférées mais non limitatives du boîtier d'appareil électroménager décrit ci-dessus sont les suivantes, prises individuellement ou en combinaison :
- la chicane crée un décalage ayant une composante de décalage radial par rapport à un axe de rotation de la roue de ventilation, et une composante de décalage axial par rapport à un axe de rotation de la roue de ventilation, de préférence en direction du côté de la base destiné à reposer sur le plan de travail, notamment vers la partie inférieure de la base ;
- la roue de ventilation est entraînée en rotation par l'arbre moteur ;
- le moteur s'étend sensiblement autour d'un axe de moteur, et le déflecteur comprend une paroi latérale cylindrique disposée autour du moteur sur toute une dimension du moteur le long de l'axe de moteur, de sorte que lors du fonctionnement du moteur, le déflecteur guide l'écoulement d'air de ventilation le long du moteur entre une paroi extérieure du moteur et la paroi latérale du déflecteur ;
- l'entrée d'air comprend une pluralité d'ouïes d'entrée formées dans le boîtier, et/ou la sortie d'air comprend une pluralité d'ouïes de sortie formées dans le boîtier à distance de la pluralité d'ouïes d'entrée ;
- la sortie d'air comprend un ou plusieurs orifices de sortie, sous la forme d'ouïes de sortie par exemple, formés dans une paroi inférieure de la base sous la base ;
- la sortie d'air comprend un ou plusieurs orifices de sortie, sous la forme d'ouïes de sortie par exemple, formés dans une paroi arrière de la base à l'opposé du socle ;
- la sortie d'air comprend un ou plusieurs orifices de sortie, sous la forme d'ouïes de sortie par exemple, formés dans une paroi latérale de la base ;
- le circuit de ventilation comprend en outre une expansion de volute disposée entre l'évacuation d'air et le conduit de sortie, l'expansion de volute formant un conduit évasé présentant une section croissante vers le conduit de sortie ;
- le boîtier d'appareil électroménager comprend en outre un système de mesure d'une vitesse de rotation de l'arbre moteur, comprenant un anneau magnétique fixé sur l'arbre moteur et un capteur à effet Hall fixé sur le déflecteur, l'anneau magnétique et le capteur à effet Hall étant situés à l'intérieur du déflecteur, entre le moteur et l'évacuation d'air ;
- le moteur s'étend sensiblement autour d'un axe de moteur, le capteur à effet Hall est disposé radialement entre l'anneau magnétique et le déflecteur, et l'anneau magnétique est disposé axialement entre le moteur et la roue de ventilation ;
- un diamètre de l'anneau magnétique est inférieur à un diamètre de la roue de ventilation, de sorte que l'air de ventilation s'écoule au travers d'une couronne délimitée à l'intérieur par l'anneau magnétique et à l'extérieur par la roue de ventilation ;
- l'évacuation d'air est agencée en regard de la roue de ventilation ;
- la tête est montée pivotante par rapport à la base, ou la tête est montée mobile en translation par rapport à la base.

Selon un deuxième aspect, l'invention concerne un appareil électroménager de préparation culinaire comprenant un boîtier selon le premier aspect, et un accessoire de travail, l'accessoire de travail étant adapté pour être entraîné en rotation par l'entraineur ou comportant un organe rotatif configuré pour être entrainé en rotation par l'entraineur.

### DESCRIPTION DES FIGURES

D'autres caractéristiques, buts et avantages de la présente invention apparaîtront à la lecture de la description détaillée qui va suivre, donnée à titre d'exemple non limitatif, qui sera illustrée par les figures suivantes :
La figure 1 et la figure 2 sont des vues en coupe schématiques partielles d'un boîtier d'appareil électroménager de préparation culinaire selon un mode de réalisation de l'invention.
La figure 3 est une vue en perspective schématique partielle d'un boîtier d'appareil électroménager de préparation culinaire selon un mode de réalisation de l'invention.
La figure 4 est une vue en coupe de dessous schématique partielle de l'intérieur d'un boîtier d'appareil électroménager de préparation culinaire selon un mode de réalisation de l'invention, au niveau de la sortie du moteur.
La figure 5 et la figure 6 sont des vues en perspective schématiques d'un moteur et d'une partie d'un circuit de ventilation d'un boîtier d'appareil électroménager de préparation culinaire selon un mode de réalisation de l'invention.
La figure 7 est une vue en perspective schématique d'un appareil électroménager de préparation culinaire selon un mode de réalisation de l'invention.
La figure 8 est une vue en perspective schématique de l'appareil électroménager de préparation culinaire illustré sur la figure 7, représenté dans une configuration dans laquelle la tête est relevée pour permettre la mise en place ou le retrait d'un accessoire de travail porté par la tête.

### DESCRIPTION DETAILLEE DE L'INVENTION

### Présentation générale d'un boîtier d'appareil électroménager de préparation culinaire

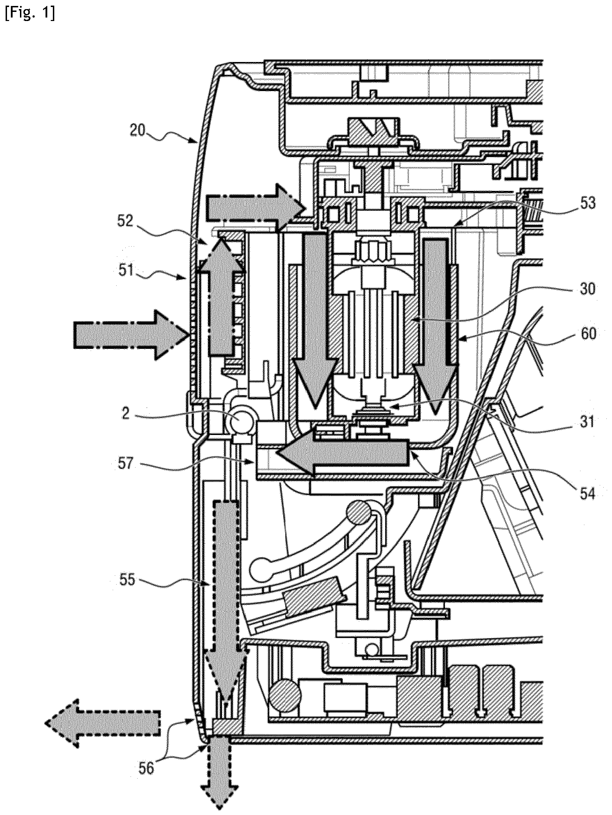

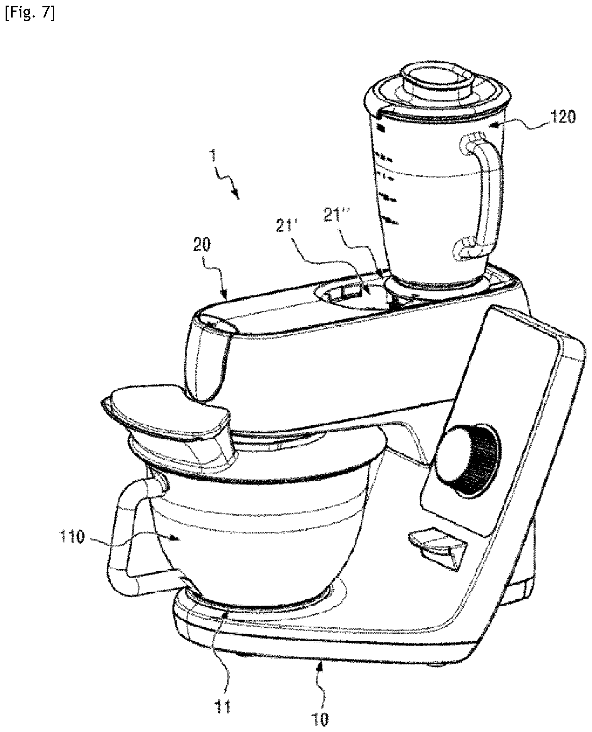

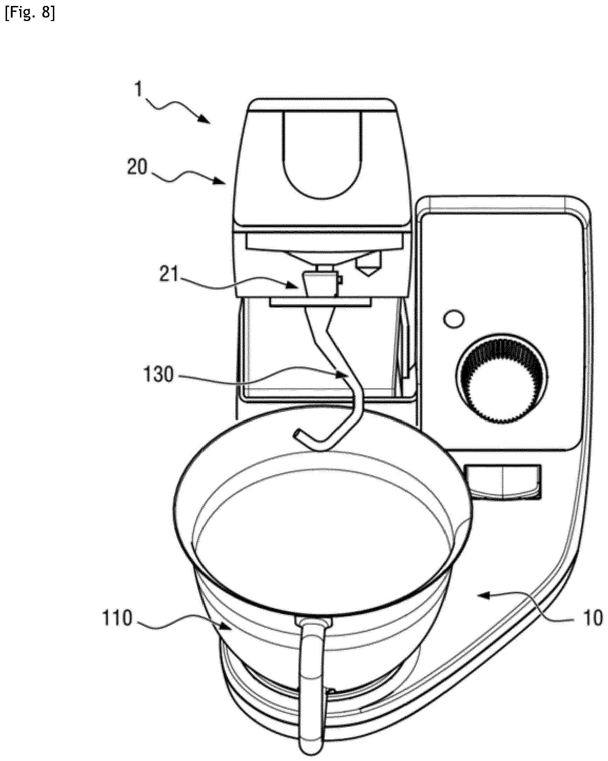

Un boîtier 1 d'appareil électroménager de préparation culinaire, illustré à titre d'exemple non limitatif en figures 1 à 3, et en figures 7 et 8, comprend :
- une base 10 destinée à reposer sur un plan de travail et formant un socle 11 configuré pour recevoir un récipient de travail 110,
- une tête 20 montée mobile par rapport à la base 10 et présentant au moins un entraineur 21, 21', 21",
- un moteur 30 prévu pour entraîner en rotation un arbre moteur 31 relié audit au moins un entraineur 21, 21', 21", si désiré par l'intermédiaire d'un dispositif de transmission, et
- un circuit de ventilation ayant une roue de ventilation 70 prévue pour générer un écoulement d'air de ventilation adapté pour refroidir le moteur 30 lors du fonctionnement du moteur 30, le circuit de ventilation comprenant une entrée d'air 51 ménagée dans une première paroi du boîtier 1, une sortie d'air 56 ménagée dans une deuxième paroi du boîtier 1, un déflecteur 60 agencé autour du moteur 30 et présentant une admission d'air 53 et une évacuation d'air 54, un conduit d'entrée 52 ménagé dans le boîtier 1 et reliant l'entrée d'air 51 à l'admission d'air 53, et un conduit de sortie 55 ménagé dans le boîtier 1 et reliant l'évacuation d'air 54 à la sortie d'air 56, de sorte que lors du fonctionnement du moteur 30, le déflecteur 60 guide l'écoulement d'air de ventilation le long du moteur 30 depuis l'admission d'air 53 vers l'évacuation d'air 54.

Le conduit de sortie 55 est agencé pour former une chicane afin que la sortie d'air 56 soit située à distance et décalée par rapport à la roue de ventilation 70.

Le circuit de ventilation permet de réduire une température du moteur 30 lors de son fonctionnement, notamment lorsque le moteur 30 est amené à fonctionner pendant des durées prolongées, qui peuvent être de l'ordre de plusieurs minutes, par exemple pour pétrir de la pâte.

Le déflecteur 60 forme un tubage qui entoure le moteur 30 et permet un refroidissement efficace du moteur 30, l'écoulement d'air de ventilation circulant entre le moteur 30 et le déflecteur 60. Ainsi qu'illustré en figure 1, le conduit d'entrée 52 guide l'écoulement de ventilation depuis l'entrée d'air 51 jusqu'à l'admission d'air 53 du déflecteur 60. Le déflecteur 60 guide ensuite l'écoulement d'air le long du moteur 30, depuis l'admission d'air 53 jusqu'à l'évacuation d'air 54 du déflecteur 60. Le conduit de sortie 55 guide alors l'air depuis l'évacuation d'air 54 du déflecteur 60 jusqu'à la sortie d'air 56. L'écoulement d'air de ventilation est ainsi canalisé et guidé dans le circuit de ventilation, ce qui permet de réduire les perturbations aérodynamiques dans l'écoulement d'air de ventilation.

Grâce au chicanage du conduit de sortie 55, la sortie d'air 56 est située à distance et décalée par rapport à la roue de ventilation 70. En d'autres termes, le conduit de sortie 55 forme une chicane, de sorte que la sortie d'air 56 à l'extérieur de l'appareil ne soit pas agencée directement en regard de l'écoulement d'air expulsé par la roue de ventilation 70. Le chicanage permet donc d'éviter une sortie d'air 56 en vis-à-vis direct de la roue de ventilation 70. Ainsi, la disposition revendiquée permet de réduire le bruit aéraulique causé par le fonctionnement du moteur 30.

Ainsi, la disposition revendiquée permet d'optimiser l'efficacité de la ventilation du moteur 30 par le circuit de ventilation, et de réduire le bruit causé par le fonctionnement du moteur 30.

### Définitions

Le moteur 30 et l'arbre moteur 31 s'étendent sensiblement autour d'un axe de moteur M. Dans la suite de la demande, une hauteur est définie en relation avec une position le long de l'axe de moteur M, de sorte que la roue de ventilation 70 est située plus bas que l'entraineur 21 de la tête 20 le long de l'axe de moteur M.

Une direction radiale correspond à une direction perpendiculaire à la direction de l'axe de moteur M et passant par l'axe de moteur M. Les termes interne et externe sont définis en relation avec la direction radiale, de sorte qu'un élément interne est situé plus proche de l'axe de moteur M qu'un élément externe.

### Base

La base 10 est adaptée pour recevoir un récipient de travail 110, tel qu'une cuve, généralement amovible. Le récipient de travail 110 est reçu sur le socle 11 de la base 10, sous la tête 20. La base 10 est raccordée à la tête 20.

### Tête

La tête 20 s'étend en regard et à distance de la base 10, en surplomb au-dessus de la base 10 et le cas échéant du récipient de travail 110.

L'entraineur 21 de la tête 20 peut être ménagé dans une face inférieure de la tête 20 située au-dessus et en regard du socle 11, ainsi que représenté sur la figure 8. Si désiré, le boîtier 1 peut comporter au moins un entraineur 21', 21" supplémentaire ménagé dans une face supérieure de la tête 20. Plus particulièrement, deux entraineurs 21', 21" supplémentaires peuvent être ménagés dans la face supérieure de la tête 20. Chaque entraineur 21, 21', 21" de la tête 20 est adapté pour recevoir un accessoire de travail 120, 130 amovible. Les entraineurs 21, 21' 21" sont adaptés pour être entraînés par le moteur 30 à des vitesses de rotation différentes. L'entraineur 21 est un entraineur basse vitesse. Les entraineurs 21', 21" supplémentaires sont des entraineurs grande vitesse. L'entraineur 21 peut être entraîné en rotation par l'arbre moteur 31 par l'intermédiaire d'un dispositif de transmission, tel qu'un réducteur. L'un des entraineurs supplémentaires 21" peut être entraîné en rotation directement par l'arbre moteur 31, tandis que l'autre des entraineurs supplémentaires 21' peut être entraîné en rotation par l'arbre moteur 31 par l'intermédiaire d'un dispositif de transmission, tel qu'un réducteur.

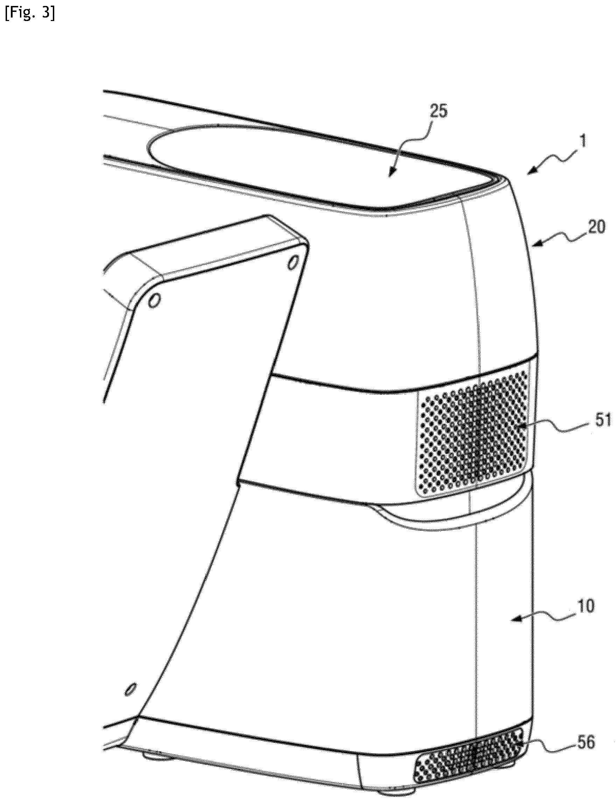

La tête 20 peut comprendre une trappe amovible 25 adaptée pour recouvrir les deux entraineurs supplémentaires 21', 21" lorsqu'aucun accessoire de travail n'est mis en place sur les entraineurs 21', 21" supplémentaires, tel que représenté sur la figure 3.

La tête 20 est montée mobile par rapport à la base 10. Dans l'exemple de réalisation illustré sur les figures, la tête 20 est montée pivotante par rapport à la base 10 selon un axe de pivotement 2, tel que visible sur la figure 1. En alternative, la tête 20 peut notamment être montée mobile en translation par rapport à la base 10, en particulier mobile en translation selon une direction sensiblement perpendiculaire au plan de travail sur lequel peut reposer la base 10.

### Moteur

Le moteur 30 peut être agencé dans la tête 20, tel que représenté dans l'exemple de réalisation illustré sur les figures. En variante, le moteur 30 peut notamment être agencé dans la base 10.

Dans l'exemple de réalisation illustré sur les figures, l'axe de moteur M est sensiblement perpendiculaire au plan de travail sur lequel peut reposer la base 10.

### Roue de ventilation

La roue de ventilation 70, ou ventilateur, permet d'éjecter l'écoulement d'air de ventilation vers la sortie d'air 56, en créant une dépression qui permet d'aspirer de l'air de ventilation pour refroidir le moteur 30.

La roue de ventilation 70 peut être entraînée en rotation par l'arbre moteur 31. La roue de ventilation 70 tourne alors à la même vitesse que le moteur 30, et c'est la rotation du moteur 30 qui permet de générer, via la roue de ventilation 70, l'écoulement d'air de ventilation adapté pour refroidir le moteur 30 lors de son fonctionnement.

La roue de ventilation 70 peut être située en-dessous du moteur 30 et en-dessous du déflecteur 60.

### Déflecteur

Le déflecteur 60 peut être agencé dans la tête 20, notamment lorsque le moteur 30 est également agencé dans la tête 20.

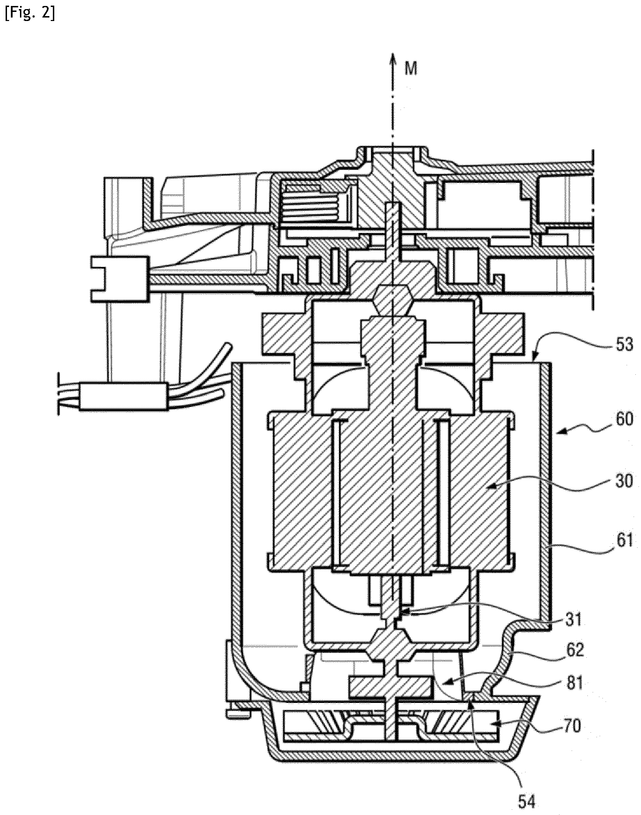

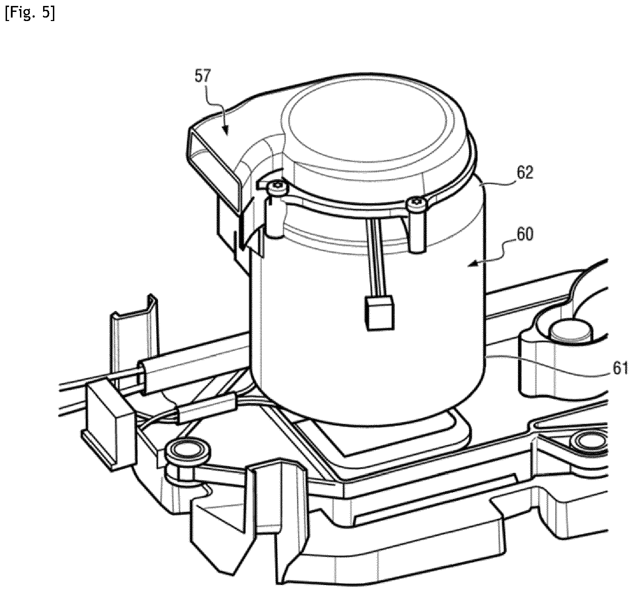

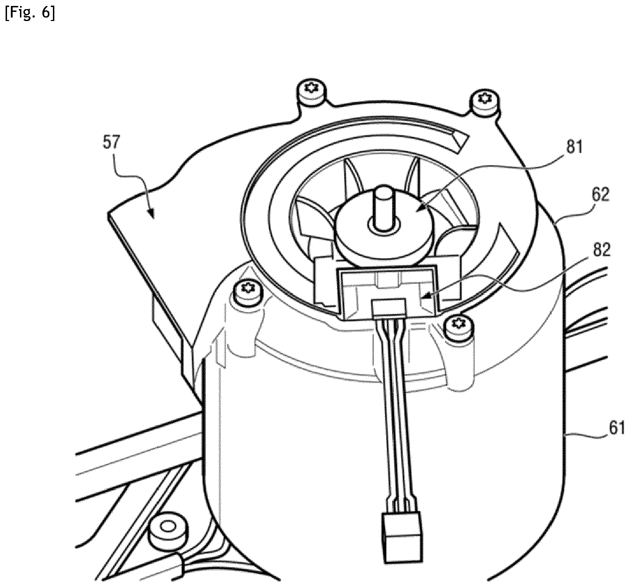

Le déflecteur 60 peut comprendre une paroi latérale 61 cylindrique disposée autour du moteur 30 sur toute une dimension du moteur 30 le long de l'axe de moteur M, de sorte que lors du fonctionnement du moteur 30, le déflecteur 60 guide l'écoulement d'air de ventilation le long du moteur 30 entre une paroi extérieure du moteur 30 et la paroi latérale 61 du déflecteur 60. Le déflecteur 60 forme ainsi un tube entourant le moteur 30. Une telle paroi latérale 61 cylindrique, le cas échéant circulaire, permet d'optimiser la circulation de l'écoulement d'air de ventilation autour du moteur 30. Les figures 2, 5 et 6 illustrent à titre d'exemple non limitatif un déflecteur 60 comprenant une paroi latérale 61 cylindrique et une paroi de fond 62.

L'admission d'air 53 du déflecteur 60 peut correspondre à une extrémité haute du déflecteur 60, et l'évacuation d'air 54 du déflecteur 60 correspondre à une extrémité basse du déflecteur 60.

L'admission d'air 53 peut correspondre à un bord délimitant une extrémité haute de la paroi latérale 61 cylindrique du déflecteur 60. Un diamètre de l'admission d'air 53 correspond alors à un diamètre de la paroi latérale 61 cylindrique du déflecteur 60.

L'évacuation d'air 54 est agencée en regard de la roue de ventilation 70. L'évacuation d'air 54 peut déboucher en regard d'une paroi inférieure et/ou en regard d'une paroi interne du boîtier 1.

L'évacuation d'air 54 peut correspondre à un bord délimitant une extrémité basse de la paroi latérale 61 cylindrique du déflecteur 60. Un diamètre de l'évacuation d'air 54 correspond alors à un diamètre de la paroi latérale 61 cylindrique du déflecteur 60. En variante, le déflecteur 60 peut comprendre une paroi de fond 62 s'étendant sous la paroi latérale 61 et raccordée à la paroi latérale 61, la paroi de fond 62 formant une base 10 arrondie et présentant une ouverture centrale ayant un diamètre correspondant sensiblement à un diamètre de la roue de ventilation Dr. Ainsi, le déflecteur 60 s'arrondit dans sa partie basse. L'évacuation d'air 54 correspond à un bord délimitant une extrémité basse de la paroi de fond 62 du déflecteur 60, un diamètre de l'évacuation d'air 54 correspondant à un diamètre de l'ouverture centrale. La paroi de fond 62 peut être agencée sous le moteur 30 de sorte à ménager un espace entre le moteur 30 et la roue de ventilation 70, afin d'optimiser la ventilation.

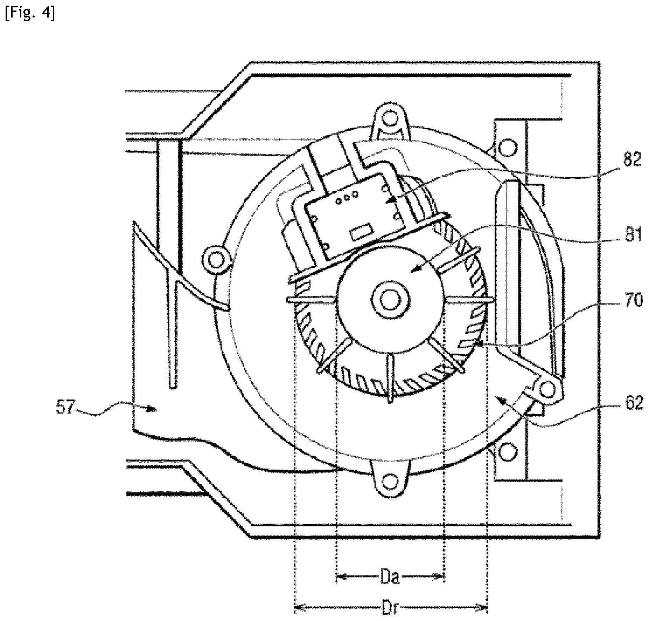

Le circuit de ventilation peut comprendre une expansion de volute 57 disposée à l'extrémité libre de l'évacuation d'air 54, l'expansion de volute 57 formant un conduit évasé présentant une section croissante vers le conduit de sortie 55. En d'autres termes, l'évacuation d'air 54 au niveau de l'expansion de volute 57 s'ouvre vers l'extérieur. L'expansion de volute 57 est illustrée à titre d'exemple non limitatif en figures 4 à 6.

L'expansion de volute 57 permet d'optimiser l'aérodynamisme de l'extraction de l'écoulement d'air de ventilation en sortie du moteur 30, et de guider l'écoulement d'air de ventilation vers la sortie d'air 56 en diminuant les perturbations aérodynamiques dans l'écoulement de ventilation. L'expansion de volute 57 permet ainsi d'augmenter l'efficacité de la ventilation, donc du refroidissement du moteur 30.

### Entrée d'air

L'entrée d'air 51 peut être formée dans la tête 20. En d'autres termes, la première paroi du boîtier 1 peut correspondre à une paroi de la tête 20.

L'entrée d'air 51 peut comprendre une pluralité d'ouïes d'entrée formées dans le boîtier 1, ainsi qu'illustré à titre d'exemple non limitatif en figure 3. Les ouïes d'entrée correspondent à des orifices traversants formés dans la première paroi du boîtier 1, plus précisément dans une paroi de la tête 20 du boîtier 1. La pluralité d'ouïes d'entrée permet d'optimiser la ventilation du moteur 30 par le circuit de ventilation.

### Sortie d'air

La sortie d'air 56 peut être formée dans la base 10 du boîtier 1, ainsi qu'illustré à titre d'exemple non limitatif en figure 3. En d'autres termes, la deuxième paroi du boîtier 1 peut correspondre à une paroi de la base 10. La sortie d'air 56 peut être ménagée dans une paroi inférieure de la base 10. La sortie d'air 56 peut être située en-dessous de l'entrée d'air 51.

La sortie d'air 56 peut comprendre une pluralité d'ouïes de sortie formées dans le boîtier 1, le cas échéant à distance de la pluralité d'ouïes d'entrée. Les ouïes de sortie correspondent à des orifices traversants formés dans la deuxième paroi du boîtier 1, plus précisément dans une paroi de la base 10 du boîtier 1. La pluralité d'ouïes de sortie permet d'optimiser la ventilation du moteur 30 par le circuit de ventilation.

La sortie d'air 56 peut en outre comprendre une pluralité d'ouïes de sortie formées dans la même paroi du boîtier 1 que la pluralité d'ouïes d'entrée de l'entrée d'air 51, en-dessous et à distance de la pluralité d'ouïes d'entrée. Dans l'exemple de réalisation illustré sur les figures, la sortie d'air 56 comprend des ouïes de sortie inférieures agencées dans une paroi inférieure de la base 10, ou en d'autres termes, sous la base 10. Dans l'exemple de réalisation illustré sur les figures, la sortie d'air 56 comprend des ouïes de sortie arrière agencées dans une paroi arrière de la base 10 à l'opposé du socle 11. A titre de variante, la sortie d'air 56 pourrait comprendre des ouïes de sortie latérales agencées dans une paroi latérale de la base 10.

### Conduit d'entrée

Le conduit d'entrée 52 peut être ménagé dans la tête 20 du boîtier 1 d'appareil électroménager.

Le conduit d'entrée 52 peut être agencé pour former une chicane afin que l'entrée d'air 51 soit située à distance et décalée par rapport à l'admission d'air 53. Un tel chicanage du conduit d'entrée 52 permet d'éviter que l'entrée d'air 51 soit agencée en vis-à-vis direct du moteur 30, et ainsi de réduire le bruit généré lors du fonctionnement du moteur 30. Le chicanage du conduit d'entrée 52 permet aussi d'éloigner l'entrée d'air 51 du moteur 30. Ainsi, les bruits générés par le moteur 30 ont plus de difficultés à sortir du boîtier 1.

### Conduit de sortie

Le conduit de sortie 55 est agencé pour former une chicane afin que la sortie d'air 56 soit située à distance et décalée par rapport à la roue de ventilation 70.

Dans l'exemple de réalisation illustré sur les figures, le conduit de sortie 55 est agencé dans la base 10 du boîtier 1 d'appareil électroménager. L'évacuation d'air 54 débouche en regard d'une paroi interne latérale du boîtier 1. L'air descend le long de ladite paroi interne latérale pour atteindre la sortie d'air 56. Du fait que le conduit de sortie 55 est agencé dans la base 10 du boîtier 1, il en découle que la paroi interne latérale est également ménagée dans la base 10 du boîtier 1, comme cela est représenté à la figure 1 notamment.

Comme indiqué plus haut, la chicane crée une mise à distance et un décalage de la sortie d'air 56 par rapport à la roue de ventilation 70. Ce décalage a une composante radiale par rapport à l'axe de rotation de la roue de ventilation et une composante axiale selon l'axe de rotation de la roue de ventilation. La composante axiale du décalage créé par la chicane tend à déporter la sortie d'air 56 vers la partie inférieure de la base 10, c'est-à-dire le côté de la base 10 destinée à reposer sur un plan de travail.

C'est ce conduit de sortie 55 et la chicane qu'il forme qui permet d'agencer, comme précisé plus haut, la sortie d'air 56 dans la partie basse de la base 10, c'est-à-dire la partie inférieure correspondant au côté de la base la plus proche du plan de travail en utilisation.

Ainsi, la sortie d'air 56 peut comprendre un ou plusieurs orifices de sortie formés dans la paroi inférieure de la base 10 (c'est-à-dire sous la base 10), et/ou un ou plusieurs orifices de sortie formés dans la paroi arrière de la base 10 à l'opposé du socle 11, et/ou un ou plusieurs orifices de sortie formés dans une paroi latérale de la base 10.

Ces orifices de sortie peuvent prendre la forme d'ouïes de sortie comme décrit plus haut.

L'exemple illustré à la figure 2 comprend une base 10 munie d'une sortie d'air 56 comprenant une combinaison d'orifices de sortie formés dans la paroi inférieure de la base 10 (c'est-à-dire sous la base 10) et d'orifices de sortie formés dans la paroi arrière de la base 10 à l'opposé du socle 11.

### Système de mesure d'une vitesse de rotation de l'arbre moteur

Le boîtier 1 d'appareil électroménager peut comprendre en outre un système de mesure d'une vitesse de rotation de l'arbre moteur 31, comprenant un anneau magnétique 81 fixé sur l'arbre moteur 31 et un capteur à effet Hall 82 fixé sur le déflecteur 60. L'anneau magnétique 81 et le capteur à effet Hall 82 sont situés à l'intérieur du déflecteur 60, entre le moteur 30 et l'évacuation d'air 54. Un système de mesure d'une vitesse de rotation de l'arbre moteur 31 est illustré à titre d'exemple non limitatif en figure 4.

Un tel système de mesure d'une vitesse de rotation de l'arbre moteur 31 est compact, et permet de mesurer la vitesse de rotation du moteur 30. Le fait de positionner le système de mesure à l'intérieur du déflecteur 60, donc au sein du déflecteur 60, et sous le moteur 30, permet de réduire le bruit de ventilation.

L'anneau magnétique 81 est entraîné en rotation par l'arbre moteur 31, l'anneau magnétique 81 étant une pièce tournante. Ainsi, l'anneau magnétique 81 peut compter le nombre de tours par minute de l'arbre moteur 31. L'anneau magnétique 81 forme un disque magnétique. L'anneau magnétique 81 est agencé entre le moteur 30 et la roue de ventilation 70, en-dessous du moteur 30 et au-dessus de roue de ventilation 70.

Lorsque le déflecteur 60 comporte une paroi de fond 62 agencée sous le moteur 30 de sorte à ménager un espace entre le moteur 30 et la roue de ventilation 70, le capteur à effet Hall 82 et l'anneau magnétique 81 peuvent être logés au niveau de la paroi de fond 62 du déflecteur 60, dans l'espace ménagé par la paroi de fond 62 entre le moteur 30 et la roue de ventilation 70. Ainsi, le système de mesure est logé sans augmenter l'encombrement de l'ensemble. Le capteur à effet Hall 82 peut être agencé à l'intérieur de la paroi de fond 62 et recouvert par un couvercle de protection. Cet agencement particulier permet une bonne protection du capteur à effet Hall 82 contre la pollution.

Le capteur à effet Hall 82 peut être disposé radialement entre l'anneau magnétique 81 et le déflecteur 60. Le capteur à effet Hall 82 est ainsi disposé en périphérie de l'anneau magnétique 81, tout en restant à l'intérieur du déflecteur 60. Le capteur à effet Hall 82 peut être porté par le déflecteur 60, notamment par la paroi de fond 62 du déflecteur 60. Le capteur à effet Hall 82 est une pièce statique, c'est-à-dire fixe par rapport au déflecteur 60. Chaque tour effectué par l'anneau magnétique 81 autour de l'arbre moteur 31 engendre une impulsion par pôle de l'anneau magnétique 81, qui influence le capteur à effet Hall 82, ce qui permet d'en déduire la vitesse de rotation de l'arbre moteur 31. Le capteur à effet Hall 82 et l'anneau magnétique 81 peuvent être disposés sensiblement en une même position le long de l'axe de moteur M. Ainsi, les deux éléments sont adjacents, ce qui permet une bonne fiabilité de la mesure de vitesse de rotation.

L'anneau magnétique 81 peut être disposé axialement entre le moteur 30 et la roue de ventilation 70.

Un diamètre de l'anneau magnétique Da peut être inférieur à un diamètre de la roue de ventilation Dr, de sorte que l'air de ventilation s'écoule au travers d'une couronne délimitée à l'intérieur par l'anneau magnétique 81 et à l'extérieur par la roue de ventilation 70, ainsi qu'illustré à titre d'exemple non limitatif en figure 4. En d'autres termes, l'écoulement de ventilation passe à l'extérieur de l'anneau magnétique 81 et à l'intérieur de la roue de ventilation 70, au sein d'une surface annulaire délimitée à l'intérieur par l'anneau magnétique 81, et à l'extérieur par la roue de ventilation 70. Le diamètre interne de la couronne correspond au diamètre de l'anneau magnétique Da, et le diamètre externe de la couronne correspond au diamètre de la roue de ventilation Dr. Le diamètre de l'anneau magnétique Da est suffisamment grand pour que l'anneau magnétique 81 puisse compter les tours de l'arbre moteur 31 de manière satisfaisante, et suffisamment petit pour permettre à l'écoulement d'air de ventilation d'être expulsé à travers la roue de ventilation 70.

### Système de contrôle d'une vitesse de rotation de l'arbre moteur

Le boîtier 1 d'appareil électroménager peut comprendre en outre un système de contrôle d'une la vitesse de rotation de l'arbre moteur 31, comprenant :
- un système de lecture de la vitesse de rotation de l'arbre moteur 31, et
- une unité de contrôle de la vitesse de rotation de l'arbre moteur 31, qui peut comprendre une carte électronique de contrôle.

Le système de contrôle, en particulier l'unité de contrôle, est disposé à distance du moteur 30 et du circuit de ventilation, afin d'être protégé des pollutions qui peuvent être engendrées par la ventilation. Par exemple, le système de contrôle peut être agencé dans la base 10 du boîtier 1, sous le circuit de ventilation. Le capteur à effet Hall 82 étant placé sous le moteur 30, il est proche du système de contrôle et peut ainsi efficacement transmettre les informations à l'unité de contrôle.

Le système de contrôle d'une vitesse de rotation de l'arbre moteur 31 permet de contrôler la vitesse de rotation du moteur 30 et/ou la puissance fournie par le moteur 30, notamment en fonction du récipient de travail 110, de l'accessoire de travail 120, 130 qui est utilisé, de l'ingrédient qui est travaillé, etc. Le système de contrôle peut limiter la vitesse maximale du moteur 30, afin de réduire le bruit engendré par le moteur 30 tournant à plein régime. Le système de contrôle peut augmenter la puissance du moteur 30, par exemple si la pâte à préparer offre de la résistance, afin que le moteur 30 tourne à une vitesse optimale pour pétrir la pâte.

Un appareil électroménager de préparation culinaire, illustré à titre d'exemple non limitatif en figures 7 et 8, comprend un boîtier 1 selon l'un quelconque des modes de réalisation décrit ci-dessus. La tête du boîtier 1 présente au moins un entraineur 21, 21', 21". L'appareil électroménager peut comprendre en outre au moins un ou des accessoires de travail 120, 130 adaptés pour être montés sur au moins un desdits entraineurs 21, 21', 21".

L'appareil électroménager de préparation culinaire peut comprendre en outre un récipient de travail 110 adapté pour être disposé sur le socle 11 de la base 10.

L'accessoire de travail 130 peut être adapté pour être entraîné en rotation par l'entraineur 21, 21', 21", ou comporter un organe rotatif configuré pour être entrainé en rotation par l'entraineur 21, 21', 21".

La figure 7 illustre un appareil électroménager de préparation culinaire comprenant le boîtier 1 et un accessoire de travail 120 à grande vitesse monté sur l'entraineur 21", lequel est entraîné en prise directe par le moteur 30. L'appareil électroménager de préparation culinaire illustré sur la figure 7 comprend aussi le récipient de travail 110, non utilisé avec l'accessoire de travail 120.

L'accessoire de travail 120 à grande vitesse peut notamment être un bol mixeur, ou bol blender, tel que représenté sur la figure 7. L'accessoire de travail 120 comporte un organe rotatif configuré pour être entrainé en rotation par l'entraineur 21".

Un autre accessoire de travail, non représenté sur les figures, peut être monté sur l'autre des entraineurs supplémentaires 21'. Cet autre accessoire de travail peut notamment être un bol robot multifonctions, par exemple un bol robot multifonctions pouvant hacher des aliments avec un couteau rotatif, et/ou râper des aliments avec des disques rotatifs, et/ou extraire du jus avec un organe presse-agrumes. Cet autre accessoire de travail comporte aussi un organe rotatif configuré pour être entrainé en rotation par l'entraineur 21'.

La figure 8 illustre un appareil électroménager de préparation culinaire comprenant un accessoire de travail 130 à vitesse lente monté dans l'entraineur 21. L'accessoire de travail 130 est entraîné en rotation par l'entraineur 21. L'accessoire de travail 130 peut notamment être un accessoire crochet, tel que représenté sur la figure 8. L'accessoire de travail 130 peut par exemple être aussi un fouet, un malaxeur ou un batteur adapté pour remuer une préparation placée dans le récipient de travail 110 lorsque l'accessoire de travail 130 est entraîné en rotation par l'entraineur 21.

La tête 20 est pivotante autour d'un axe de pivotement 2 entre une position de mise en place adaptée pour autoriser une mise en place de l'accessoire de travail 130, y compris lorsque le récipient de travail 110 est positionné sur la base 10, et une position de travail adaptée pour permettre à l'accessoire de travail 130 de s'étendre dans le récipient de travail 110. L'accessoire 1 peut être mis en place sur l'entraineur 21 lorsque la tête 20 est dans la position de mise en place, telle que représentée sur la figure 8. Puis, la tête 20 peut être rabaissée, depuis la position de mise en place jusqu'à la position de travail, telle que représentée sur la figure 7, de sorte que l'accessoire de travail 130 s'étende dans un volume formé par le récipient de travail 110.

D'autres modes de réalisation peuvent être envisagés et une personne du métier peut facilement modifier les modes ou exemples de réalisation exposés ci-dessus ou en envisager d'autres tout en restant dans la portée de l'invention telle que définie par les revendications.

## Revendications

1. Boîtier (1) d'appareil électroménager de préparation culinaire, comprenant :
- une base (10) destinée à reposer sur un plan de travail et formant un socle (11) configuré pour recevoir un récipient de travail (110),
- une tête (20) montée mobile par rapport à la base (10) et présentant au moins un entraineur (21, 21', 21"),
- un moteur (30) prévu pour entraîner en rotation un arbre moteur (31) relié audit au moins un entraîneur (21, 21', 21 "), si désiré par l'intermédiaire d'un dispositif de transmission ; et
- un circuit de ventilation ayant une roue de ventilation (70) prévue pour générer un écoulement d'air de ventilation adapté pour refroidir le moteur (30) lors du fonctionnement du moteur (30), le circuit de ventilation comprenant
- une entrée d'air (51) ménagée dans une première paroi du boîtier (1), l'entrée d'air (51) étant formée dans la tête (20),
- une sortie d'air (56) ménagée dans une deuxième paroi du boîtier (1), la sortie d'air (56) étant formée dans la base (10),
- un déflecteur (60) agencé autour du moteur (30) et présentant une admission d'air (53) et une évacuation d'air (54), de sorte que lors du fonctionnement du moteur (30), le déflecteur (60) guide l'écoulement d'air de ventilation le long du moteur (30) depuis l'admission d'air (53) vers l'évacuation d'air (54), et le moteur (30) et le déflecteur (60) étant agencés dans la tête (20),
- un conduit d'entrée (52) ménagé dans la tête (20) du boîtier (1) et reliant l'entrée d'air (51) à l'admission d'air (53), et
- un conduit de sortie (55) ménagé dans la base (10) du boîtier (1) et reliant l'évacuation d'air (54) à la sortie d'air (56),
**caractérisé en ce que** :
- l'évacuation d'air (54) débouche en regard d'une paroi interne latérale du boîtier (1) ménagée dans la base (10) ;
- le conduit de sortie (55) est agencé pour former une chicane entre l'évacuation d'air (54) et la sortie d'air (56) afin que la sortie d'air (56) soit située à distance et décalée par rapport à la roue de ventilation (70) de sorte que, en fonctionnement, l'air descend le long de ladite paroi interne latérale pour atteindre la sortie d'air (56).

2. Boîtier (1) d'appareil électroménager selon la revendication 1, dans lequel la chicane crée un décalage ayant une composante de décalage radial par rapport à un axe de rotation de la roue de ventilation (70), et une composante de décalage axial par rapport à un axe de rotation de la roue de ventilation (70) en direction du côté de la base (10) destiné à reposer sur le plan de travail.

3. Boîtier (1) d'appareil électroménager selon la revendication 1 ou la revendication 2, dans lequel la roue de ventilation (70) est entraînée en rotation par l'arbre moteur (31).

4. Boîtier (1) d'appareil électroménager selon l'une quelconque des revendications 1 à 3, dans lequel le moteur (30) s'étend sensiblement autour d'un axe de moteur (M), et le déflecteur (60) comprend une paroi latérale (61) cylindrique disposée autour du moteur (30) sur toute une dimension du moteur (30) le long de l'axe de moteur (M), de sorte que lors du fonctionnement du moteur (30), le déflecteur (60) guide l'écoulement d'air de ventilation le long du moteur (30) entre une paroi extérieure du moteur (30) et la paroi latérale (61) du déflecteur (60).

5. Boîtier (1) d'appareil électroménager selon l'une quelconque des revendications 1 à 4, dans lequel l'entrée d'air (51) comprend une pluralité d'ouïes d'entrée formées dans le boîtier (1), et dans lequel la sortie d'air (56) comprend une pluralité d'ouïes de sortie formées dans le boîtier (1) à distance de la pluralité d'ouïes d'entrée.

6. Boîtier (1) d'appareil électroménager selon l'une quelconque des revendications 1 à 5, dans lequel la sortie d'air (56) comprend au moins un orifice de sortie formé dans une paroi inférieure de la base 10 sous la base (10).

7. Boîtier (1) d'appareil électroménager selon l'une quelconque des revendications 1 à 6, dans lequel la sortie d'air (56) comprend au moins un orifice de sortie formé dans une paroi arrière de la base (10) à l'opposé du socle (11).

8. Boîtier (1) d'appareil électroménager selon l'une quelconque des revendications 1 à 7, dans lequel la sortie d'air (56) comprend au moins un orifice de sortie formé dans une paroi latérale de la base (10).

9. Boîtier (1) d'appareil électroménager selon l'une quelconque des revendications 1 à 8, dans lequel le circuit de ventilation comprend en outre une expansion de volute (57) disposée entre l'évacuation d'air (54) et le conduit de sortie (55), l'expansion de volute (57) formant un conduit évasé présentant une section croissante vers le conduit de sortie (55).

10. Boîtier (1) d'appareil électroménager selon l'une quelconque des revendications 1 à 9, comprenant en outre un système de mesure d'une vitesse de rotation de l'arbre moteur (31), comprenant un anneau magnétique (81) fixé sur l'arbre moteur (31) et un capteur à effet Hall (82) fixé sur le déflecteur (60), l'anneau magnétique (81) et le capteur à effet Hall (82) étant situés à l'intérieur du déflecteur (60), entre le moteur (30) et l'évacuation d'air (54).

11. Boîtier (1) d'appareil électroménager selon la revendication 10, dans lequel le moteur (30) s'étend sensiblement autour d'un axe de moteur (M), le capteur à effet Hall (82) est disposé radialement entre l'anneau magnétique (81) et le déflecteur (60), et l'anneau magnétique (81) est disposé axialement entre le moteur (30) et la roue de ventilation (70).

12. Boîtier (1) d'appareil électroménager selon la revendication 10 ou la revendication 11, dans lequel un diamètre de l'anneau magnétique (Da) est inférieur à un diamètre de la roue de ventilation (Dr), de sorte que l'air de ventilation s'écoule au travers d'une couronne délimitée à l'intérieur par l'anneau magnétique (81) et à l'extérieur par la roue de ventilation (70).

13. Boîtier (1) d'appareil électroménager selon quelconque l'une des revendications 1 à 12, dans lequel l'évacuation d'air (54) est agencée en regard de la roue de ventilation (70).

14. Boîtier (1) d'appareil électroménager selon l'une quelconque des revendications 1 à 13, dans lequel la tête (20) est montée pivotante par rapport à la base (10), ou dans lequel la tête (20) est montée mobile en translation par rapport à la base (10).

15. Appareil électroménager de préparation culinaire, comprenant un boîtier (1) selon l'une quelconque des revendications 1 à 14, et un accessoire de travail (120, 130), l'accessoire de travail (120, 130) étant adapté pour être entraîné en rotation par l'entraineur (21) ou comportant un organe rotatif configuré pour être entrainé en rotation par l'entraineur (21', 21").

## Patentansprüche

1. Gehäuse (1) für ein elektrisches Haushaltsgerät zur Essenszubereitung, das Folgendes umfasst:
- eine Basis (10), die dazu bestimmt ist, auf einer Arbeitsebene zu ruhen, und einen Sockel (11) bildet, der dazu ausgestaltet ist, einen Arbeitsbehälter (110) aufzunehmen,
- einen Kopf (20), der in Bezug auf die Basis (10) beweglich gelagert ist und mindestens einen Mitnehmer (21, 21', 21") aufweist,
- einen Motor (30), der dazu vorgesehen ist, falls gewünscht, eine Motorwelle (31), die mit dem mindestens einen Mitnehmer (21, 21', 21") verbunden ist, über eine Übertragungsvorrichtung drehbar mitzunehmen; und
- einen Lüftungskreis, der ein Lüftungsrad (70) aufweist, das dazu vorgesehen ist, eine Lüftungsluftströmung zu erzeugen, die angepasst ist, den Motor (30) beim Betrieb des Motors (30) zu kühlen, wobei der Lüftungskreis Folgendes umfasst:
- einen Lufteingang (51), der in einer ersten Wand des Gehäuses (1) eingerichtet ist, wobei der Lufteingang (51) in dem Kopf (20) gebildet ist,
- einen Luftausgang (56), der in einer zweiten Wand des Gehäuses (1) eingerichtet ist, wobei der Luftausgang (56) in der Basis (10) gebildet ist,
- eine Ablenkplatte (60), die um den Motor (30) angeordnet ist und einen Lufteinlass (53) und einen Luftauslass (54) aufweist, derart dass beim Betrieb des Motors (30) die Ablenkplatte (60) die Lüftungsluftströmung vom Lufteinlass (53) entlang des Motors (30) hin zum Luftauslass (54) führt und der Motor (30) und die Ablenkplatte (60) in dem Kopf (20) angeordnet sind,
- eine Eingangsleitung (52), die in dem Kopf (20) des Gehäuses (1) eingerichtet ist und den Lufteingang (51) mit dem Lufteinlass (53) verbindet, und
- eine Ausgangsleitung (55), die in der Basis (10) des Gehäuses (1) eingerichtet ist und den Luftauslass (54) mit dem Luftausgang (56) verbindet,
**dadurch gekennzeichnet, dass**:
- der Luftauslass (54) einer seitlichen Innenwand des Gehäuses (1) gegenüberstehend mündet, die in der Basis (10) eingerichtet ist,
- die Ausgangsleitung (55) angeordnet ist, um ein Hindernis zwischen dem Luftauslass (54) und dem Luftausgang (56) zu bilden, damit der Luftausgang (56) sich derart im Abstand und in Bezug auf das Lüftungsrad (70) versetzt befindet, dass beim Betrieb die Luft entlang der seitlichen Innenwand absteigt, um den Luftausgang (56) zu erreichen.

2. Gehäuse (1) für ein elektrisches Haushaltsgerät nach Anspruch 1, wobei das Hindernis einen Versatz erzeugt, der eine radiale Versatzkomponente in Bezug auf eine Drehachse des Lüftungsrads (70) und eine axiale Versatzkomponente in Bezug auf eine Drehachse des Lüftungsrads (70) in Richtung der Seite der Basis (10) aufweist, die dazu bestimmt ist, auf der Arbeitsebene zu ruhen.

3. Gehäuse (1) für ein elektrisches Haushaltsgerät nach Anspruch 1 oder Anspruch 2, wobei das Lüftungsrad (70) durch die Motorwelle (31) drehbar angetrieben wird.

4. Gehäuse (1) für ein elektrisches Haushaltsgerät nach einem der Ansprüche 1 bis 3, wobei der Motor (30) sich im Wesentlichen um eine Motorachse (M) erstreckt und die Ablenkplatte (60) eine zylindrische Seitenwand (61) umfasst, die über eine gesamte Abmessung des Motors (30) entlang der Motorachse (M) um den Motor (30) herum angeordnet ist, derart dass beim Betrieb des Motors (30) die Ablenkplatte (60) die Lüftungsluftströmung entlang des Motors (30) zwischen einer Außenwand des Motors (30) und der Seitenwand (61) der Ablenkplatte (60) führt.

5. Gehäuse (1) für ein elektrisches Haushaltsgerät nach einem der Ansprüche 1 bis 4, wobei der Lufteingang (51) eine Vielzahl von Eintrittsöffnungen umfasst, die in dem Gehäuse (1) gebildet sind und wobei der Luftausgang (56) eine Vielzahl von Austrittsöffnungen umfasst, die in dem Gehäuse (1) im Abstand von der Vielzahl von Eintrittsöffnungen gebildet sind.

6. Gehäuse (1) für ein elektrisches Haushaltsgerät nach einem der Ansprüche 1 bis 5, wobei der Luftausgang (56) mindestens ein Ausgangsloch umfasst, das in einer unteren Wand der Basis (10) unter der Basis (10) gebildet ist.

7. Gehäuse (1) für ein elektrisches Haushaltsgerät nach einem der Ansprüche 1 bis 6, wobei der Luftausgang (56) mindestens ein Ausgangsloch umfasst, das in einer Hinterwand der Basis (10) entgegengesetzt zum Sockel (11) gebildet ist.

8. Gehäuse (1) für ein elektrisches Haushaltsgerät nach einem der Ansprüche 1 bis 7, wobei der Luftausgang (56) mindestens ein Ausgangsloch umfasst, das in einer Seitenwand der Basis (10) gebildet ist.

9. Gehäuse (1) für ein elektrisches Haushaltsgerät nach einem der Ansprüche 1 bis 8, wobei der Lüftungskreis ferner eine Spiralgehäuseerweiterung (57) umfasst, die zwischen dem Luftauslass (54) und der Ausgangsleitung (55) angeordnet ist, wobei die Spiralgehäuseerweiterung (57) eine aufgeweitete Leitung bildet, die hin zur Ausgangsleitung (55) einen zunehmenden Querschnitt aufweist.

10. Gehäuse (1) für ein elektrisches Haushaltsgerät nach einem der Ansprüche 1 bis 9, das ferner ein System zur Messung einer Drehzahl der Motorwelle (31) umfasst, das einen Magnetring (81), der an der Motorwelle (31) befestigt ist, und einen Hall-Effekt-Sensor (82) umfasst, der an der Ablenkplatte (60) befestigt ist, wobei der Magnetring (81) und der Hall-Effekt-Sensor (82) sich im Inneren der Ablenkplatte (60) zwischen dem Motor (30) und dem Luftauslass (54) befinden.

11. Gehäuse (1) für ein elektrisches Haushaltsgerät nach Anspruch 10, wobei der Motor (30) sich im Wesentlichen um eine Motorachse (M) erstreckt, der Hall-Effekt-Sensor (82) radial zwischen dem Magnetring (81) und der Ablenkplatte (60) angeordnet ist, und der Magnetring (81) axial zwischen dem Motor (30) und dem Lüftungsrad (70) angeordnet ist.

12. Gehäuse (1) für ein elektrisches Haushaltsgerät nach Anspruch 10 oder Anspruch 11, wobei ein Durchmesser des Magnetrings (Da) kleiner als ein Durchmesser des Lüftungsrads (Dr) ist, derart dass die Lüftungsluft durch einen Kranz strömt, der innen durch den Magnetring (81) und außen durch das Lüftungsrad (70) begrenzt ist.

13. Gehäuse (1) für ein elektrisches Haushaltsgerät nach einem der Ansprüche 1 bis 12, wobei der Luftauslass (54) dem Lüftungsrad (70) gegenüberstehend angeordnet ist.

14. Gehäuse (1) für ein elektrisches Haushaltsgerät nach einem der Ansprüche 1 bis 13, wobei der Kopf (20) in Bezug auf die Basis (10) schwenkbar gelagert ist, oder wobei der Kopf (20) in Bezug auf die Basis (10) translatorisch beweglich gelagert ist.

15. Elektrisches Haushaltsgerät zur Essenszubereitung, das ein Gehäuse (1) nach einem der Ansprüche 1 bis 14 und ein Arbeitszubehör (120, 130) umfasst, wobei das Arbeitszubehör (120, 130) angepasst ist, um durch den Mitnehmer (21) drehbar mitgenommen zu werden, oder ein Drehorgan umfasst, das dazu ausgestaltet ist, durch den Mitnehmer (21', 21'') drehbar mitgenommen zu werden.

## Claims

1. Housing (1) for a household electrical appliance for food preparation, comprising :
- a base (10) intended to rest on a work surface and forming a pedestal (11) configured to receive a work vessel (110),
- a head (20) mounted so as to be movable relative to the base (10) and having at least one driver (21, 21', 21"),
- a motor (30) intended to drive in rotation a motor shaft (31) connected to said at least one driver (21, 21', 21"), if desired via a transmission device ; and
- a ventilation circuit having a ventilation wheel (70) to generate a flow of ventilation air suitable for cooling the motor (30) during operation of the motor (30), the ventilation circuit comprising
- an air inlet (51) arranged in a first wall of the housing (1), the air inlet (51) being formed in the head (20),
- an air outlet (56) arranged in a second wall of the housing (1), the air outlet (56) being formed in the base (10),
- a deflector (60) arranged around the motor (30) and having an air intake (53) and an air discharge (54), so that during operation of the motor (30) , the deflector (60) guides the flow of ventilation air along the motor (30) from the air intake (53) to the air discharge (54), and the motor (30) and the deflector (60) being arranged in the head (20),
- an inlet duct (52) formed in the head (20) of the housing (1) and connecting the air inlet (51) to the air intake (53), and
- an outlet duct (55) formed in the base (10) of the housing (1) and connecting the air discharge (54) to the air outlet (56),
**characterized in that** :
- the air discharge (54) opens out opposite an internal side wall of the housing (1) formed in the base (10);
- the outlet duct (55) is arranged to form a baffle between the air discharge (54) and the air outlet (56) so that the air outlet (56) is located at a distance from and offset from the fan wheel (70 ) so that, in operation, the air flows down said internal side wall to reach the air outlet (56).

2. **H**ousing (1) for a domestic appliance according to claim 1, wherein the baffle creates an offset having a radial offset component with respect to an axis of rotation of the fan wheel (70), and an axial offset component with respect to an axis of rotation of the fan wheel (70) towards the side of the base (10) intended to rest on the work surface.

3. **H**ousing (1) for a domestic appliance according to claim 1 or claim 2, wherein the fan wheel (70) is driven in rotation by the motor shaft (31).

4. **H**ousing (1) for a domestic appliance according to any one of claims 1 to 3, wherein the motor (30) extends substantially around a motor axis (M), and the deflector (60) comprises a cylindrical side wall (61) disposed around the motor (30) over an entire dimension of the motor (30) along the motor axis (M), so that during operation of the motor (30), the deflector (60) guides the flow of ventilation air along the motor (30) between an outer wall of the motor (30) and the side wall (61) of the deflector (60).

5. **H**ousing (1) for a domestic appliance according to any one of claims 1 to 4, wherein the air inlet (51) comprises a plurality of inlet ports formed in the housing (1), and wherein the air outlet (56) comprises a plurality of outlet ports formed in the housing (1) at a distance from the plurality of inlet ports.

6. **H**ousing (1) for a domestic appliance according to any one of claims 1 to 5, wherein the air outlet (56) comprises at least one outlet opening formed in a bottom wall of the base (10) below the base (10).

7. **H**ousing (1) for a domestic appliance according to any one of claims 1 to 6, wherein the air outlet (56) comprises at least one outlet opening formed in a rear wall of the base (10) opposite the pedestal (11).

8. **H**ousing (1) for a domestic appliance according to any one of claims 1 to 7, wherein the air outlet (56) comprises at least one outlet opening formed in a side wall of the base (10).

9. **H**ousing (1) for a domestic appliance according to any one of claims 1 to 8, wherein the ventilation circuit further comprises a volute expansion (57) arranged between the air discharge (54) and the outlet duct (55), the volute expansion (57) forming a flared duct with a cross-section increasing towards the outlet duct (55).

10. Housing (1) for a domestic appliance according to any one of claims 1 to 9, further comprising a system for measuring a rotational speed of the motor shaft (31), comprising a magnetic ring (81) fixed to the motor shaft (31) and a Hall-effect sensor (82) fixed to the deflector (60), the magnetic ring (81) and the Hall-effect sensor (82) being located inside the deflector (60), between the motor (30) and the air discharge (54 ).

11. Housing (1) for a domestic appliance according to claim 10, wherein the motor (30) extends substantially around a motor axis (M), the Hall-effect sensor (82) is arranged radially between the magnetic ring (81) and the deflector (60), and the magnetic ring (81) is arranged axially between the motor (30) and the fan wheel (70 ).

12. **H**ousing (1) for a domestic appliance according to claim 10 or claim 11, wherein a diameter of the magnetic ring (Da) is smaller than a diameter of the ventilation wheel (Dr), so that ventilation air flows through a ring delimited on the inside by the magnetic ring (81) and on the outside by the ventilation wheel (70).

13. Housing (1) for a domestic appliance according to any one of claims 1 to 12, wherein the air discharge (54) is arranged opposite the fan wheel (70).

14. **H**ousing (1) for a domestic appliance according to any one of claims 1 to 13, wherein the head (20) is pivotally mounted with respect to the base (10), or wherein the head (20) is translationally movable with respect to the base (10).

15. Household electrical appliance for food preparation, comprising a housing (1) according to anyone of claims 1 to 14, and a working accessory (120, 130), the working accessory (120, 130) being adapted to be driven in rotation by the drive (21) or comprising a rotary member configured to be driven in rotation by the drive (21', 21").
